# EUROPÄISCHE PATENTSCHRIFT

(11) **EP 2 022 734 B1**
(45) Veröffentlichungstag und Bekanntmachung des Hinweises auf die Patenterteilung: **02.10.2013**
(21) Anmeldenummer: 08009881.7
(22) Anmeldetag: 30.05.2008
(51) Int. Cl.: B65G 27/30, B65G 27/26

(54) **Vibrationslinearförderer**
Linear vibration feeder
Convoyeur linéaire de vibrations

(30) Priorität: 01.08.2007 DE 102007036491
(43) Veröffentlichungstag der Anmeldung: 11.02.2009
(73) Patentinhaber: Afag Holding AG, 6052 Hergiswil (CH)
(72) Erfinder: Böger, Christian, 93049 Regensburg (DE); Edbauer, Franz, 93158 Teublitz (DE)
(74) Vertreter: Blaumeier, Jörg

(56) Entgegenhaltungen:
- JP-A- 3 051 210

## Beschreibung

Die Erfindung betrifft einen Vibrationslinearförderer umfassend eine Nutzmasse und eine Gegenmasse, die über eine Antriebseinheit in entgegengesetzte Richtungen schwingend bewegbar sind, wobei die Antriebseinheit vorzugsweise in einem Aufnahmeraum unterhalb der Nutzmasse angeordnet ist.

Solche Vibrationslinearförderer dienen der Förderung kleiner und kleinster Bauteile beispielsweise zu einem Montageautomaten, wo die Bauteile entweder bearbeitet oder verbaut werden. Das Arbeitsprinzip eines solchen Vibrationslinearförderers beruht darauf, dass eine Gegenmasse und eine Nutzmasse, Teil welcher eine Förderschiene ist, längs welche die Bauteile bewegt werden, in eine gegenläufige Schwingbewegung gebracht werden, so dass es zu einer Mikrowurfbewegung der Bauteile auf der Förderschiene kommt. Die Nutz- und die Gegenmasse sind jeweils über entsprechende Federelemente, vornehmlich Blattfedern bzw. Blattfederpakete, mit der Bodenplatte, über die der Vibrationslinearförderer mit einem Drittgegenstand, beispielsweise einem Montagetisch, verbunden ist, schwingbeweglich verbunden. Als Antriebseinheit kommt üblicherweise ein Elektromagnet zum Einsatz, wobei zumeist der Magnetkern mit der ihn umgebenden Wicklung mit der Gegenmasse und der Magnetanker mit der Nutzmasse verbunden ist. Bei der anliegenden Wechselspannung an der Wicklung kommt es zu einem in Abhängigkeit der Spannungsfrequenz wechselnden Magnetfeld, das auf den relativ zum Magnetkern frei beweglichen, mit diesem also nicht verbundenen Anker wirkt, woraus letztlich die gegenläufige Schwingbewegung der beiden Massen resultiert.

Das Funktionsprinzip ist üblicherweise derart, dass bei einer Anregung des Elektromagneten, wenn also die Spule bestromt wird, der Anker über das aufgebaute Magnetfeld an oder in den Magnetkern gezogen wird. Die Nutz- und die Gegenmasse werden quasi zueinander hinbewegt, die Federelemente werden entsprechend gebogen. Hier erfolgt also eine aktive Massenbewegung. Die Rückstellung erfolgt bei entregtem Elektromagneten allein über die relaxierenden Federelemente. Der Hub des Elektromagneten ist allerdings begrenzt, woraus mitunter eine relativ geringe Schwingweite resultiert, die wiederum zu einer niedrigen durchschnittlichen Fördermenge führt.

Aus JP 03-0511210 A ist ein Vibrationslinearförderer bekannt, umfassend eine Nutzmasse und eine Gegenmasse, die über eine Antriebseinheit, dort Piezoelemente, in entgegengesetzte Richtungen schwingend bewegbar sind. Die Gegenmasse ist über Federelemente mit der Bodenplatte verbunden. Die Nutzmasse hingegen ist über erste Federelemente, die mit zweiten Federelementen, an denen die Piezoelemente angeordnet sind, welche zweiten Federelemente ihrerseits an der Nutzmasse befestigt sind, mit der Gegenmasse gekoppelt.

Der Erfindung liegt damit das Problem zu Grunde, einen Vibrationslinearförderer anzugeben, bei dem unabhängig von der Art der verwendeten Antriebseinheit eine ausreichende Schwingweite sichergestellt ist.

Zur Lösung dieses Problems ist ein Vibrationslinearförderer vorgesehen, umfassend eine Nutzmasse und eine Gegenmasse, die über eine Antriebseinheit in entgegengesetzte Richtungen schwingend bewegbar sind, wobei sowohl die Nutzmasse als auch die Gegenmasse über Federelemente unmittelbar mit einer Bodenplatte verbunden sind, und wobei die Nutzmasse und die Gegenmasse über eine nicht-starre Verbindung, die ein direkt zwischen Nutz- und Gegenmasse verbundenes Schwingungsverstärkungsmittel für die von der Antriebseinheit erzeugte Schwingung darstellt oder umfasst, miteinander verbunden sind.

Bei dem erfindungsgemäßen Vibrationslinearförderer sind die Nutzmasse und die Gegenmasse miteinander beweglich verbunden, anders als im Stand der Technik, wo beide frei beweglich zueinander sind. Erfindungsgemäß bildet die nicht-starre, bewegliche mechanische Masseverbindung ein Schwingungsverstärkungsmittel bzw. enthält ein solches, wodurch eine aktive Verstärkung der von der Antriebseinheit erzeugten Schwingung oder Bewegung möglich ist. Damit können hinreichende Schwingweiten erzielt werden, auch wenn die Antriebseinheit selber nur einen relativ geringen Schwingungshub aufweist. Dies lässt es auch zu, andere Antriebseinheiten als Elektromagneten zu verwenden, z.B. einen piezoelektrischen Antrieb, bei dem der integrierte Piezoaktor nur einen sehr kleinen Hub aufweist, oder einen hydraulischen oder pneumatischen Antrieb unfassend einen reversibel aufweitbaren Balg oder einen elektrischen Antriebsmotor mit Exzentertrieb, worauf nachfolgend noch eingegangen wird. Die beiden Massen sind hier über eine durchgehende mechanische, jedoch flexible bzw. bewegliche und wegvergrößernde Verbindung bewegungsgekoppelt, anders als bei Verwendung eines Elektromagneten, wo der Anker wie beschrieben relativ zum Magnetkern, zu dem er beabstandet ist, frei beweglich ist. Bei dem erfindungsgemäßen Förderer hingegen wird über die Antriebseinheit jedwede Bewegungskomponente der Antriebseinheit, sei es in die eine oder andere Richtung, über ein Schwingungsverstärkungsmittel auf die beiden Massen übertragen, wobei die Bewegung der an der Nutz- oder der Gegenmasse angeordneten Antriebseinheit, die diese zur Schwingungserzeugung auf die schwingungsverstärkende mechanische Massenverbindung ausübt, über diese Schwingungsverstärkung vergrößert wird, so dass sich bezogen auf die erhaltene Schwingungsweite der Antriebshub deutlich vergrößert und die Schwingungsweite deutlich zunimmt, je nach Übersetzungsverhältnis der Schwingungsverstärkungsmittels, also des Verhältnisses, in dem der von der Antriebseinheit erzeugte Hub zum resultierenden Schwingungshub steht.

Nach einer ersten Erfindungsausgestaltung kann die Antriebseinheit ein piezoelektrischer Antrieb sein. Ein solcher piezoelektrischer Antrieb weist einen Aktor aus einem piezoelektrischen Material auf. An diesen wird eine hochfrequente Wechselspannung angelegt. Mit anliegender Spannung verändert der piezoelektrische Aktor seine Geometrie. Üblicherweise kann mit solchen Materialien eine definierte Längung in der einen und Verkürzung in einer hierzu senkrechten Richtung über eine erste positive Spannungsflanke und eine entsprechende Bewegung in die entgegengesetzten Richtungen über die zweite negative Spannungsflanke der Wechselspannung erreicht werden. Nachdem solche Materialien im Stande sind, ihre Form mit sehr hoher Frequenz zu ändern, ist es mit einem solchen Aktor vorteilhaft möglich, sehr hochfrequente Schwingungen zu erzeugen. Der Aktor ist dabei derart in die mechanische Verbindung geschaltet, dass er auf die beiden Massen wirkt. Bei einer ansteuerungsbedingten Längung werden die beiden Massen quasi auseinander bewegt, d. h., die Federelemente werden auseinander bzw. voneinander weggebogen und dabei eine Rückstellkraft aufgebaut. Diese Rückstellkraft arbeitet kontinuierlich gegen den piezolektrischen Aktor. Wird dieser mit der anderen Spannungsflanke angesteuert, so verkürzt er sich, worüber eine Relaxion der Federelemente möglich ist, jedoch nur soweit, wie die Rückstellbewegung in Folge der sich kontinuierlich ändernden Aktorgeometrie möglich ist.

Eine alternative Antriebseinheit kann in Form eines pneumatisch oder hydraulisch reversibel aufweitbaren Balges ausgeführt sein. Ein solcher Balg ist zwischen Nutz- und Gegenmasse geschaltet, er kann mit einem pneumatischen oder hydraulischen Arbeitsmittel beaufschlagt werden. Auch er bildet ein mechanisches Verbindungselement. Der Balg kann zwischen zwei Maximalzuständen, nämlich einem maximal aufgeblasenen und einem über die Ansteuerung definierbaren entlasteten Zustand variiert werden, wobei mit der Veränderung eine Geometrieänderung eingeht. Wird der Balg vergrößert, also beispielsweise aufgeblasen, so dehnt er sich, je nach Ausgestaltung bevorzugt definiert in eine Richtung senkrecht zur Biegeachse, worüber die beiden Massen auseinander bewegt und damit die jeweiligen Federelemente voneinander weggebogen werden. Auch hierbei wird eine Rückstellkraft aufgebaut, d. h., die Federelemente arbeiten auch hier kontinuierlich gegen den expandierenden Balg. Wird dieser entlastet, so können die Federelemente relaxieren, wobei die Relaxionsbewegung stets vom Balg definiert und begrenzt wird, nachdem die Federelemente auch während der Relaxation stets gegen den Balg arbeiten. Auch ein solcher Balg kann über ein oder mehrere vorgeschaltete Ventilelemente hinreichend schnell reversibel be- und entlastet werden, so dass auch hier hinreichend hohe Schwingfrequenzen erreicht werden können.

Eine dritte alternative Ausführungsform einer Antriebseinheit ist die eines exzentrischen oder wenigstens ein exzentrisch angeordnetes Teil treibenden Antriebsmotors. Ein solcher exzentrischer Antriebsmotor weist eine Antriebswelle auf, an der beispielsweise ein oder zwei an einander entgegengesetzten Positionen, also um 180 Grad versetzte Nocken als zur Antriebsachse exzentrische bzw. versetzte Teile angeordnet sind. Es können auch mehr als zwei Nocken, dann vorzugsweise äquidistant verteilt, vorgesehen sein. Gegen die Antriebswelle und damit gegen die Nocken arbeiten wiederum die Federelemente. In der einen Maximalstellung, in der die Nocken vertikal stehen und mithin nicht an der Nutz- und Gegenmasse angreifen, befinden sich die Federelemente in der relaxierten Stellung, die beiden Massen werden über die Federelemente gegen die Antriebswelle gedrückt. Dreht diese nun, so läuft einer der beiden Nocken auf das Schwingungsverstärkungsmittel auf und bewegt die Massen auseinander, wobei auch die Federelemente auseinandergebogen werden. Die maximale Aufweitung ist gegeben, wenn die Nocken horizontal stehen. Stets arbeiten die Federelemente gegen den treibenden Nocken. Bei einer weiteren Wellenrotation läuft der Nocken wieder von dem Schwingungsverstärkungsmittel ab. Die Massen können sich wieder über eine stets von der Wellen- und Nockenstellung definierte Rückstellbewegung aufeinander zu bewegen, die Federelemente relaxieren wiederum definiert.

Die Ansteuerung der jeweiligen Antriebseinheit erfolgt über eine geeignete Steuerungseinrichtung, die - gegebenenfalls über einen zwischengeschalteten Ventilblock im Falle eines pneumatischen oder hydraulischen Antriebs - mit der Antriebseinheit gekoppelt ist.

Das verwendbare Schwingungsverstärkungsmittel kann unterschiedlicher Natur sein. Es kann ein mechanisches Verstärkungsmittel sein, bei dem also die Wegübersetzung allein durch die mechanische Ausgestaltung des Verstärkungsmittels erfolgt. Denkbar ist aber auch die Verwendung eines hydraulisch oder pneumatisch arbeitenden Verstärkungsmittels.

Ein mechanisches Schwingungsverstärkungsmittel kann in Form wenigstens eines die Nutzmasse und die Gegenmasse verbindenden Federelements realisiert sein. Über dieses Federelement ist es möglich, den Hub der Antriebseinheit zu vergrößern und die Schwingung hierdurch zu verstärken. Dies ist besonders im Falle eines piezoelektrischen Antriebs zweckmäßig, da die Längenveränderung des Piezoelements relativ gering ist und über das gekoppelte Federelement diese Längsbewegung vergrößert und damit der Hub potenziert werden kann. Vorteilhaft kann dieses Federelement auch bei Ausgestaltung der Antriebseinheit als hydraulischer oder pneumatischer Balg oder als Exzenter- oder Nockenantrieb verwendet werden. Denn es besteht dann die Möglichkeit, diese Antriebseinheiten etwas kleiner auszugestalten, so dass der Hub des Balges verringert werden kann bzw. auch z. B. der Nockenhub kürzer gestaltet werden kann.

Zweckmäßigerweise arbeitet die jeweilige Antriebseinheit direkt gegen das Federelement. D. h., die Schwingung der Antriebseinheit wird unmittelbar in das Federelement eingekoppelt, wo sie entsprechend verstärkt wird. Dies führt zu einer effizienten Schwingungsausbreitung. Das Federelement selbst ist bevorzugt eine gebogene Blattfeder, die besonders zweckmäßig eine U-Form aufweist. Diese U-Form mit zwei Seitenschenkeln, die in der Montagestellung vertikal stehen, und einem Querschenkel, der diese beiden Seitenschenkel verbindet, ist besonders zweckmäßig im Hinblick auf die lineare Bewegung der Massen, also für den linearen Hub.

Eine weitere vorteilhafte Erfindungsausgestaltung sieht vor, dass die Steifigkeit des Federelements, insbesondere der Blattfeder, über ihre Länge variiert. Dies bietet die Möglichkeit, in bestimmten Federbereichen eine größere Schwingweite einstellen zu können, d. h., die Feder schwingt in diesem Bereich etwas weiter, was für die Verstärkung zweckmäßig ist. Dabei kann nach einer ersten Erfindungsausgestaltung die gebogene Blattfeder im Bereich des der Antriebseinheit abgewandten Federschenkels schmäler sein. D. h., die Geometrie der Feder ändert sich an dem Federschenkel, der nicht direkt oder beispielsweise über ein Zwischenstück indirekt mit der Antriebseinheit gekoppelt ist. Beispielsweise nimmt die Breite des Federschenkels in diesem Bereich auf die Hälfte der Breite des anderen Federschenkels ab. Denkbar wäre aber auch entsprechende Durchbrechungen oder dergleichen an dem Federschenkel vorzusehen. Alternativ zur einteiligen Ausgestaltung der gebogenen Blattfeder mit variierender Schenkelbreite kann auch der der Antriebseinheit abgewandte Federschenkel zweiteilig ausgeführt sein und aus einem ersten Schenkelabschnitt und einem mit diesem verbundenen zweiten Schenkelabschnitt geringerer Dicke bestehen. Bei dieser Erfindungsausgestaltung ist die Blattfeder also zweiteilig. Ein erster, seinerseits bereits im Wesentlichen U-förmiger Federteil weist eine erste Dicke auf, beispielweise von ca. 1,5 mm, während ein zweiter Federteil, der mit dem einen freien, also nicht von der Antriebseinheit direkt oder indirekt beaufschlagten Federschenkel verbunden ist, eine zweite Dicke von beispielsweise 0,8 mm aufweist. Diese beiden Feder- oder Schenkelteile sind über ein geeignetes Verbindungsstück miteinander verbunden. Auch über eine solche aus unterschiedlichen Materialdicken resultierende Änderung der Schwingungseigenschaften der Feder kann eine starke Schwingweitenerhöhung erreicht werden, die auch durch entsprechende Wahl der verwendeten Blattfederteile (verschiedene Dicken, Breiten, Materialien) nach Bedarf eingestellt werden können.

Anstelle eines Federelements kann ein mechanisches Schwingungsverstär-kungsmittel auch in Form eines Scharniers realisiert sein, dessen einer Schenkel drehbar mit der Nutzmasse und dessen anderer Schenkel drehbar mit der Gegenmasse verbunden ist. Über die Schenkellänge und den Winkel zwischen den Schenkeln, den diese in der nahestmöglichen Position zueinander einnehmen, kann eine beachtliche Übersetzung erreicht werden. Die Antriebseinheit, also z.B. der Piezoaktor, arbeitet gegen einen der beiden Schenkel des Scharniers.

Ein hydraulisch oder pneumatisch arbeitendes Verstärkungsmittel kann in Form zweier hintereinander geschalteter Kolben realisiert sein, wobei der Durchmesser des mit der Nutzmasse gekoppelten Kolbens kleiner als der des mit der Gegenmasse gekoppelten Kolbens, oder andersherum, ist. Bei einem Querschnittsverhältnis der Kolbenflächen von z.B. 1:10 verschiebt sich der kleine Kolben um z.B. 10 mm, wenn der große Kolben um 1 mm bewegt wird.

Dabei kann der größere Kolben mittels einer ein Flüssigkeitsreservoir begrenzenden Membran, die mittelbar oder unmittelbar über die Antriebseinheit bewegbar ist, realisiert sein. Über die Antriebseinheit wird die Membran bewegt, worüber auf die Flüssigkeit, z.B. ein Öl, eingewirkt wird. Das Flüssigkeitsreservoir weist einen Abschnitt geringeren Durchmessers auf, in den die Flüssigkeit hineingedrückt wird, wobei der dort zurückgelegte Weg weit länger ist, als die Membran bewegt wurde. In diesem Bereich ist der zweite Kolben vorgesehen, der über die sich bewegende Flüssigkeitssäule bewegt wird und darüber die andere Masse bewegt. Wird die Membran entlastet, so kann der zweite Kolben die Flüssigkeitssäule wieder zurückdrücken, es kommt zur Schwingung, wobei die Schwingungsweite über die quasi hydraulisch realisierte Übersetzung deutlich vergrößert ist.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Vibrationslinear-förderers einer ersten Ausführungsform mit einem piezoelektrischen Antrieb,
- Fig. 2: eine Prinzipdarstellung eines erfindungsgemäßen Vibrationslinear-förderers einer zweiten Ausführungsform mit einem exzentrischen Antrieb,
- Fig. 3: eine Prinzipdarstellung eines erfindungsgemäßen Vibrationslinear-förderers einer dritten Ausführungsform mit einem pneumatisch oder hydraulischen reversibel aufweitbaren Balg,
- Fig. 4: eine Prinzipdarstellung eines erfindungsgemäßen Vibrationslinear-förderers einer vierten Ausführungsform mit einem piezoelektrischen Antrieb und einem Schwingungsverstärkungsmittel in Form einer hydraulischen Kolbenübersetzung, und
- Fig. 5: eine Prinzipdarstellung eines erfindungsgemäßen Vibrationslinear-förderers einer fünften Ausführungsform mit einem piezoelektrischen Antrieb und einem Schwingungsverstärkungsmittel in Form eines Scharniers.

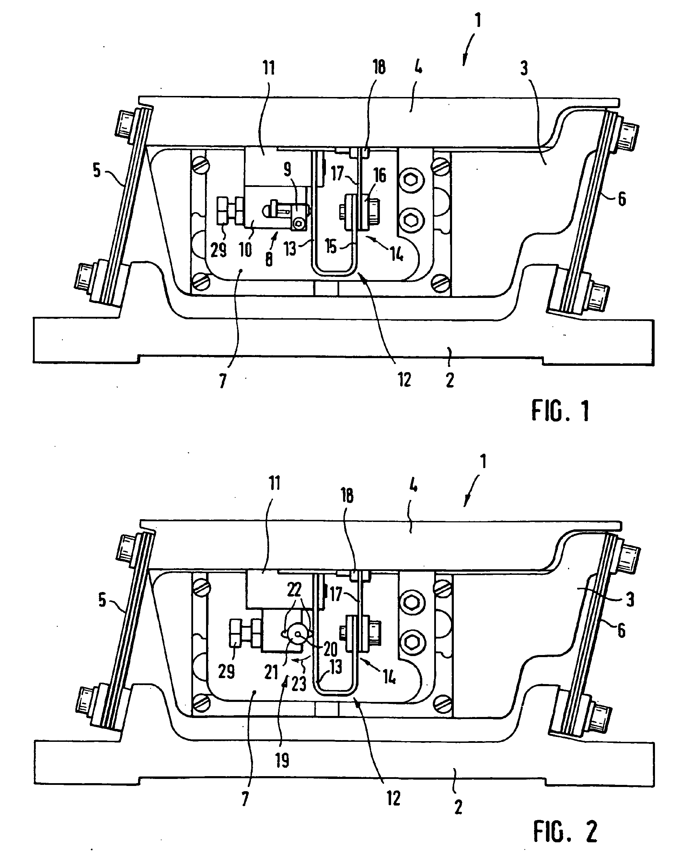

Fig. 1 zeigt einen erfindungsgemäßen Vibrationslinearförderer 1, umfassend eine Bodenplatte 2, eine Gegenmasse 3 sowie eine Nutzmasse 4, von der nur ein Teil dargestellt ist. Nicht gezeigt ist die auf der Nutzmasse 4 anzuordnende Förderschiene, längs welche die mit dem Vibrationslinearförderer 1 zu bewegenden Bauteile gefördert werden. Die Gegenmasse 3 und die Nutzmasse 4 sind jeweils an beiden Enden über Federelemente 5, 6 mit der Bodenplatte 2 verbunden, über welche Federelemente 5, 6 die Gegenmasse 3 und die Nutzmasse 4 gegeneinander schwingen können. Die die jeweiligen Massen 3, 4 mit der Bodenplatte 2 verbindenden Federelemente 5, 6, bei denen es sich um Blattfederpakete handelt, sind - gesehen in Längsrichtung des Vibrationslinearförderers 1 - über Kreuz versetzt angeordnet. D. h., bezogen auf die Darstellung in Fig. 1 sind an jeder Seite jeweils zwei Federelemente 5, 6 hintereinander angeordnet, von denen das eine die Gegenmasse 3 und das andere die Nutzmasse 4 mit der Bodenplatte 2 schwingbeweglich verbindet. Das Federelement 5, das die Nutzmasse 4 mit der Bodenplatte 2 verbindet, ist in Fig. 1 sichtbar, während das an der anderen Seite befindliche Federelement 5 hinter dem sichtbaren Federelement 6, das an dieser Seite die Gegenmasse 3 lagert, angeordnet ist. Das die Gegenmasse 3 an der anderen Seite lagernde Federelement 6 ist hier nicht sichtbar, es befindet sich hinter dem die Nutzmasse 3 lagernden, gezeigten Federelement 5. An den Massen 3, 4 sind entsprechende Ansätze vorgesehen, an denen die Federelemente 5, 6 befestigt sind.

An der Gegenmasse 3 ist eine Tasche 7 eingefräst, in der die Antriebseinrichtung 8, bei der es sich im gezeigten Ausführungsbeispiel nach Fig. 1 um einen piezoelektrischen Antrieb handelt, angeordnet ist. Der piezoelektrische Antrieb 8 umfasst einen piezoelektrischen Aktor 9, der in einem geeigneten Aktorgehäuse 10 angeordnet ist, das über einen Befestigungsblock 11 mit der Nutzmasse 4 verbunden ist. An dem Verbindungsblock 11 ist des Weiteren ein Schwingungsverstärkungselement in Form eines Federelements 12, das hier als U-förmig gebogene Blattfeder ausgebildet ist, mit dem einen Federschenkel 13 angeordnet. Der piezoelektrische Aktor 9 greift unmittelbar an dem Federschenkel 13 an, wenn er über eine hochfrequente Ansteuerungsspannung gesteuert seine definierte Längenänderung vollzieht.

Das Federelement 12 weist einen zweiten Federschenkel 14 auf, der hier zweiteilig ist. Er umfasst einen ersten Schenkelabschnitt 15 als Teil der einstückigen U-förmigen Blattfeder, der eine erste Dicke aufweist. Mit diesem ist über eine feste Verbindung 16 ein zweiter Schenkelabschnitt 17 verbunden, der eine geringere Dicke aufweist, mithin also ein anderes Federverhalten besitzt. Er ist in Folge der geringeren Dicke bei gleicher anliegender Kraft weiter auslenkbar. Hierüber kann eine deutliche Erhöhung bzw. Verstärkung der über den piezoelektrischen Antrieb 9 erzielbaren Schwingungsweite erreicht werden. Der Schenkelabschnitt 17 ist in einer geeigneten Halterung 18 angeordnet, die wiederum mit der Gegenmasse 3 verbunden ist bzw. Teil dieser ist.

Ersichtlich ist hier eine durchgehende mechanische, jedoch flexible Bewegungsverbindung zwischen Nutzmasse 4 und Gegenmasse 3 gegeben. Diese mechanische Verbindung wird hier im Wesentlichen durch das U-förmige Federelement 12 realisiert, wobei in diese mechanische Verbindung der piezoelektrische Antrieb 8 geschaltet ist und unmittelbar auf das Federelement 12 einwirkt. Das Federelement 12 erwirkt eine deutliche Verstärkung der Bewegung des piezoelektrischen Antriebs bzw. dessen realisierbaren Längungswegs, verglichen mit einer direkten Ankopplung des Piezoantriebs, wenn also die Antriebseinheit zwischen der Nutz- und Gegenmasse eingebaut ist und direkt auf die beiden Massen wirkt.

Wie beschrieben wird der piezoelektrische Antrieb 8 mit einer hochfrequenten Steuerspannung angesteuert. Dies führt dazu, dass der piezoelektrische Aktor 9 spannungsabhängig definierte Längenänderung vornimmt. Bei Anliegen der einen Steuerspannungshalbwelle längt sich der piezoelektrische Aktor 9, bei Anliegen der anderen Halbwelle verkürzt er sich gesehen in seiner Wirkrichtung. Dies führt dazu, dass kontinuierlich das Federelement 12 - bezogen auf die Darstellung in Fig. 1 - bei einer Aktorlängung nach rechts gedrückt wird und damit vorgespannt wird. Der piezoelektrische Aktor arbeitet also unmittelbar gegen das Federelement 12. Die Federelemente 5, 6 werden auseinander gedrückt, sie biegen sich um die jeweilige Biegeachse. Bei einer Aktorverkürzung relaxiert das Federelement 12 und die Federelemente 5, 6 wieder, sie arbeiten also de facto gegen den Aktor selbst, das Federelement bewegt sich also wieder nach links und die Federelemente 5, 6 biegen sich zurück, bis der Aktor erneut spannungsbedingt eine Längung erfährt. Hieraus resultiert eine hochfrequente Schwingung des Federelements, die dieses unter Verstärkung der Schwingungsweite über den zweiten Schenkelabschnitt 17, der wie beschrieben in Folge seiner geringeren Dicke weiter bzw. stärker schwingt, verstärkt an die Gegenmasse 3 übertragen wird. Hierüber erfolgt also eine mittels einer durchgehenden mechanischen Verbindung realisierte, über das zwischengeschaltete Federelement verstärkte Schwingung der Nutzmasse 4 relativ zur Gegenmasse 3. In Folge der direkten Bewegungskopplung ist die jeweilige Schwingung der Nutz- und der Gegenmasse 4, 3 synchron und gegenphasig. Denn nachdem das Federelement 12 stets gegen den Aktor arbeitet, unabhängig davon, ob dieser eine Längung oder Verkürzung erfährt, arbeiten zwangsläufig auch die Federelemente 5, 6 stets gegen den Aktor. Bei sich längendem Aktor werden die Federelemente 5, 6 voneinander wegbewegt, also etwas auseinandergebogen, bei sich verkürzendem Aktor relaxieren sie wieder und biegen sich zueinander hin in die in Fig. 1 gezeigte Grundstellung bei verkürztem Aktor. Diese Rückstellbewegung ist von dem Aktor bzw. der Aktorgeometrie definiert, die beiden Massen können nicht vollkommen frei schwingen, nachdem sie stets über das Federelement 12 gegen den Aktor arbeiten.

Wie Fig. 1 ferner zeigt, weist der piezoelektrische Antrieb 8 ein Einstellelement 29 auf, über das die Relativposition des piezoelektrischen Aktors 9 zum U-förmigen Federelement 12 eingestellt werden kann. Hierüber kann eine Optimierung der Piezoaktorenposition relativ zum Federelement 12 vorgenommen werden, wie auch eine etwaige Vorspannung des Federelements 12 hierüber eingestellt werden kann.

Eine weitere erfindungsgemäße Ausgestaltung eines Vibrationslinearförderers zeigt Fig. 2. Der Aufbau des dort gezeigten Vibrationslinearförderers 1 entspricht dem aus Fig. 1, es ist also ebenfalls eine Bodenplatte 2 vorgesehen, über die der Vibrationslinearförderer 1 an ein Maschinegestell oder dergleichen festgeschraubt wird, wie auch eine Gegenmasse 3 und eine Nutzmasse 4 vorhanden sind. Beide sind wiederum über Federelemente 5, 6 gegeneinander und relativ zur Bodenplatte 2 schwingebeweglich an dieser angeordnet.

Die hier vorgesehene Antriebseinheit ist ein elektrischer Antriebsmotor 19 mit exzentrisch angeordneten Nocken. Der Motor 19 weist eine Abtriebswelle 20 auf, an der ein Exzenterbauteil 21 mit zwei vorspringenden Nocken 22 angeordnet ist. Der Antriebsmotor 19 ist wiederum an einem Verbindungsblock 11 angeordnet, der wiederum an der Nutzmasse 4 befestigt ist. Vorgesehen ist weiterhin auch hier ein Schwingungsverstärkungselement in Form eines U-förmigen Federelements 12, das dem aus Fig. 1 entspricht. D. h., dieses ist mit seinen Federelementschenkel 13 am Verbindungsblock 11 und damit an der Nutzmasse 4 angeordnet, während der zweite Federelementschenkel 14, der auch hier zweiteilig ausgeführt ist, über einen Verbindungsblock 18 mit der Gegenmasse 3 verbunden ist.

Die Ausgestaltung ist nun derart, dass der Antriebsmotor 20, der in seiner Relativposition zum Federelement 12 ebenfalls über ein Stellelement 29 in Längsrichtung gestellt werden kann, mit den beiden Nocken 22 gegen das Federelement 12 arbeitet (mehr als zwei Nocken sind ebenfalls denkbar). Bei der Rotation der Abtriebswelle 20, dargestellt durch den Pfeil 23, drehen die Nocken 22 je nach Drehfrequenz an dem Federschenkel 13 vorbei, laufen auf diesen auf und lenken diesen nach rechts aus. Hieraus resultiert, dass die Massen 3, 4 auseinander bewegt werden, das Federelement 12 wird nach rechts bewegt und überträgt seine Auslenkung, verstärkt über den dünneren Federschenkelabschnitt 17, auf die Gegenmasse 3, wie auch ein entsprechendes Bewegungsanteil auf die Nutzmasse 4 übertragen wird. Die Federelemente 5, 6 werden voneinander wegbewegt. Dreht nun die Abtriebswelle 20 weiter, läuft der aufgelaufene Nocken 22 wieder von dem Federschenkel 13 herunter, die auch hier gegen den Antriebsmotor 19 arbeitenden Federelemente 5, 6 können relaxieren, es kommt zur Rückstellbewegung, die Massen 3, 4 bewegen sich wieder zueinander. Im nächsten Zyklus läuft der zweite Nocken 22 auf das Federelement 12 auf, die zyklische Bewegung beginnt von neuem.

Auch hier ist eine unmittelbare mechanische, jedoch flexible Kopplung zwischen Nutz- und Gegenmasse 3, 4 über das die vom Antrieb eingeleitete Bewegung oder Schwingung verstärkende Federelement 12 gegeben, in welche mechanische Verbindung hier der exzentrische Antrieb mit dem Motor 19 geschaltet ist. Auch hier arbeiten die Federelemente 5, 6 zu jedem Zeitpunkt gegen den Antriebsmotor 19, hier ist also die Schwingbewegung über die jeweilige Drehstellung des Antriebsmotors 19 bzw. der Nocken 20 definiert. Das Federelement 12 bewirkt auch hier eine deutliche Schwingungsverstärkung, verglichen mit der Schwingweite, die bei direkter Kopplung des an der Nutzmasse angeordneten Antriebs mit der Gegenmasse erreicht werden könnte.

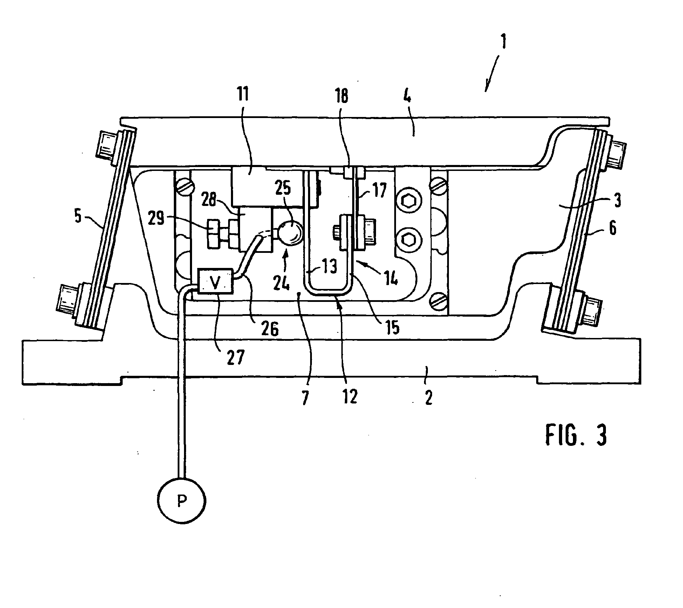

Weiterhin zeigt Fig. 3 eine weitere Ausgestaltung eines erfindungsgemäßen Vibrationslinearförderers, dessen Aufbau dem der zuvor beschriebenen Ausgestaltungen entspricht, mithin ist auch hier eine Bodenplatte 2, eine Gegenmasse 3 sowie eine Nutzmasse 4 vorgesehen, die über entsprechende Federelemente 5, 6 gelagert sind.

Als Antriebseinheit 24 ist hier ein reversibel aufweitbarer Balg 25, z. B. aus Kunststoff (z. B. PTFE) vorgesehen, der hydraulisch oder pneumatisch zwischen einer maximal aufgeweiteten Stellung und einer entlasteten Form, in der er etwas kleiner ist, gestellt werden kann. Hierzu ist eine geeignete Hydraulik- oder Pneumatikleitung 26 vorgesehen, der ein entsprechendes Ventilbauteil 27 vorgeschaltet ist, das wiederum mit einer Pumpe P kommuniziert. Der aufweitbare Balg ist an einem geeigneten Gehäusebauteil 28 angeordnet, das wiederum über ein Stellelement 29 relativ zum U-förmigen Federelement 12 verstellt werden kann. Das Gehäusebauteil 28 ist wiederum am Verbindungsblock 11 angeordnet und damit fest mit der Nutzmasse 4 verbunden, an welchem Verbindungsblock 11 auch der Schenkel 13 des U-förmigen Federelements 12 angeordnet ist, das auch hier wiederum zweiteilig ausgeführt ist und mit dem zweiten Schenkel 14, bzw. dessen zweiten Schenkelabschnitt 17 an dem Verbindungsblock 18 der Gegenmasse 3 angeordnet ist.

Wie beschrieben kann der aufweitbare Balg 25 ebenfalls mit hoher Frequenz aufgeweitet und entlastet werden, womit eine Geometrieänderung verbunden ist. Hierzu wird über eine geeignete Steuerungsleitung über eine nicht näher gezeigte Steuerung beispielsweise das Ventilelement 27 entsprechend angesteuert. In jedem Fall arbeitet auch hier der Balg 25 unmittelbar gegen das Federelement 12, so dass dieses bei aufgeweitetem Balg 25 nach rechts bewegt wird, die Federelementschwingung wird an die Gegenmasse 3 in verstärkter Form übertragen, beide Massen 3, 4 bewegen sich auseinander, die Federelemente 5, 6 werden voneinander weggebogen. Wird der Balg 25 entlastet so können die Federelemente 5, 6 relaxieren, die Massen werden wieder aufeinander zu bewegt, das Federelement 12 bewegt sich nach links. Auch hier arbeiten die Federelemente 5, 6 bzw. das Federelement 12 direkt gegen den Balg 25. Dessen Position bzw. Geometrie ist im wesentlichen wegbestimmend für die Auseinander- und Rückstellbewegung der Federelemente 5, 6 und damit der Massen 3, 4. Es ist also auch hier eine durchgehende mechanische flexible Verbindung gegeben, Teil welcher der Balg ist.

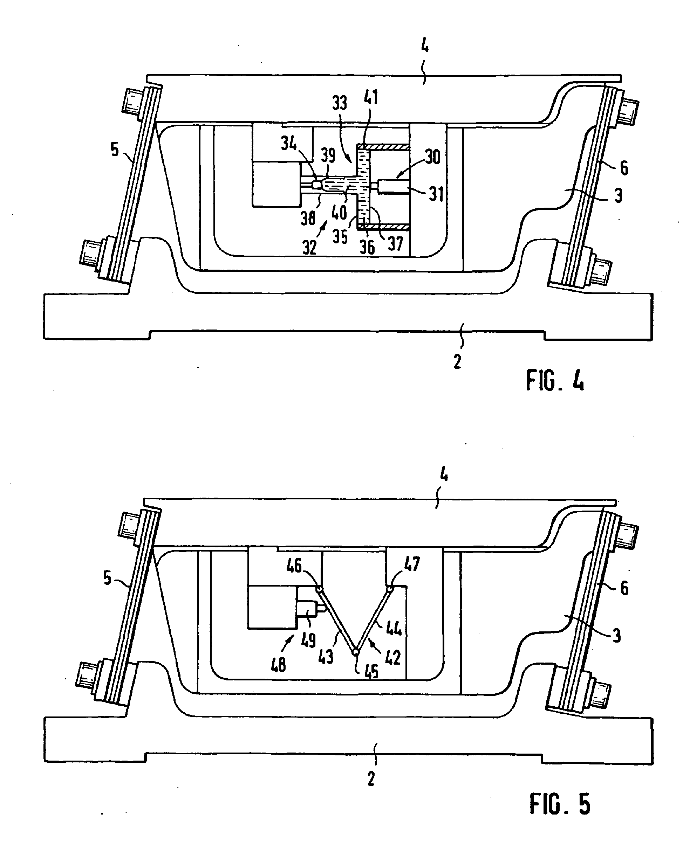

Fig. 4 zeigt einen erfindungsgemäßen Vibrationslinearförderer, dessen Aufbau dem der zuvor beschriebenen Ausgestaltung entspricht, auch ist hier eine Bodenplatte 2, eine Gegenmasse 3 sowie eine Nutzmasse 4 vorgesehen, die über entsprechende Federelemente 5, 6 schwingbeweglich gelagert sind. Als Antriebseinheit 30 ist auch hier, wie bezüglich Fig. 1 beschrieben, eine piezoelektrische Antriebseinheit 31 vorgesehen, die im gezeigten Ausführungsbeispiel an der Gegenmasse 3 angeordnet ist. Als Schwingungsverstärkungsmittel ist hier eine hydraulische Kolbenanordnung 32 vorgesehen, umfassend einen ersten hydraulischen Kolben 33, der der Gegenmasse 3 zugeordnet ist, sowie in den zweiten Kolben 34, der mit der Nutzmasse 4 verbunden ist beziehungsweise auf diese wirkt. Der hydraulische Kolben 33 umfasst eine Flüssigkeitsreservoir 35, das mit einer Flüssigkeit, z.B. einer Hydraulikflüssigkeit 36 gefüllt ist. Der piezoelektrische Antrieb 31 wirkt auf eine flexible Membran 37, die den hydraulischen Kolben 33 zur Seite der Gegenmasse 3 hin abschließt. Der vorzugsweise kreisförmige Durchmesser der Membran 37 beziehungsweise des Flüssigkeitsreservoirs 35 in diesem Bereich ist deutlich größer als in einem sich verjüngenden Abschnitt 38, in dem das Flüssigkeitsreservoir über eine zweite Membran 39, ebenfalls flexibel, begrenzt ist. Diese Flüssigkeitssäule 40, die in diesem verschmälerten Abschnitt 38 angeordnet ist, drückt auf den zweiten Kolben 34, der wiederum mit der Nutzmasse 4 gekoppelt ist. Wird nun die Membran 37 bei sich längendem piezoelektrischen Aktor 31 im gezeigten Beispiel nach links gedrückt, so wird das Volumen des breiten Bereichs 41 des Flüssigkeitsreservoirs verringert, Flüssigkeit 36 wird in den verjüngten Abschnitt 38 gedrückt und die Flüssigkeitssäule 40 verlängert sich, worüber der zweite Kolben 34 nach links bewegt wird. Hierüber werden die beiden Massen 3, 4 auseinandergedrückt und auch die Federelemente 5, 6 voneinander wegbewegt. Wenn der piezoelektrische Aktor 31 sich wieder verkürzt, können die Federelemente 5, 6 relaxieren, der zweite Kolben 34 drückt die Flüssigkeitssäule 40 wieder zurück, die Membran 37 wird im gezeigten Beispiel nach rechts bewegt.

Über diese Hydraulikkolbenanordnung 32 kann ebenfalls eine beachtliche Schwingungsverstärkung erreicht werden. Den der Weg, um den die Flüssigkeitssäule 40 verlängert wird, wenn der piezoelektrische Aktor 31 sich längt, ist deutlich größer infolge der deutlich unterschiedlichen Durchmesserverhältnissen in den beiden Abschnitten 38 und 41 des Flüssigkeitsreservoirs 35, verglichen mit dem tatsächlichen Längungsweg des piezoelektrischen Aktors. Auch hierüber kann folglich eine beachtliche Schwingungsweitenvergrößerung erreicht werden.

Fig. 5 zeigt schließlich eine fünfte Ausführungsform eines erfindungsgemäßen Vibrationslinearförderer, dessen Aufbau ebenfalls den zuvor beschriebenen Ausgestaltungen entspricht. Als Schwingungsverstärkungsmittel kommt hier ein Scharnier 42 zum Einsatz, bestehend aus zwei Schenkeln 43, 44, die über ein erstes Gelenk 45 schwenkbar miteinander verbunden sind. Die beiden Enden der Schenkel 43, 44 sind über entsprechende Drehgelenke 46, 47 mit der Nutzmasse 4 beziehungsweise der Gegenmasse 3 verbunden. Diese Drehverbindung ist der Gestalt, dass die Drehbewegung der Schenkel 43, 44 begrenzt ist, das heißt, es wird eine Winkelstellung definiert, bis zu welcher die Winkel aufeinander zugeschwenkt werden können, eine weitere Schwenkbewegung der Schenkel 43, 44 aufeinander ist seitens der Gelenke 46, 47 gesperrt. Es ist also ein Mindestöffnungswinkel des Scharniers 42 über die Gelenke 46, 47 definiert.

Als Antriebseinheit 48 ist auch hier ein piezoelektrischer Antrieb 49 vorgesehen, der im gezeigten Beispiel an der Nutzmasse angeordnet ist und unmittelbar auf den nutzmassenseitig angelenkten Schenkel 43 wirkt. Dies führt dazu, dass das Scharnier um das Gelenk 46 nach rechts bewegt beziehungsweise geschwenkt wird. Nachdem in der Ausgangsstellung das Gelenk 47 ein Verschwenken des Schenkels 44 gemäß Fig. 4 nach rechts nicht zulässt, wird hierüber zwangsläufig die Gegenmasse 3 nach rechts bewegt. Dabei ist, letztlich dem Hebelgesetz folgend, der Weg, den die Drehachse des Gelenks 47 nach rechts bewegt wird, deutlich größer als der Weg, den die Drehachse des Gelenks 45 nach rechts verschoben wird. Die Länge der hieraus resultierenden Nutzmassenbewegung ist folglich das Ergebnis der Verschiebung des Scharniers relativ zu dem Gelenk 46 sowie zu der Winkeländerung des Öffnungswinkels zwischen den beiden Schenkeln 43, 44. Der piezoelektrische Aktor 49 sollte dabei möglichst nahe am Gelenk 46 angreifen, so dass trotz geringem Aktorhub das Gelenk 45 möglichst weit nach rechts und daraus resultierend das Gelenk 47 und mit ihm die Nutzmasse 3 der Scharniergeometrie folgend noch weiter bewegt wird.

Wenn sich der piezoelektrische Aktor 49 wieder verkürzt, können die Federelemente 5, 6 relaxieren, was dazu führt, dass die mechanische Aufschwenkbewegung wieder rückgängig gemacht wird, das heißt, die Schenkel 43, 44 bewegen sich wieder aufeinander zu. Auch über diese Scharnieranordnung kann, aus der Geometrie des Scharniers und seiner Anordnung folgend, eine beachtliche Schwingungsverstärkung erreicht werden.

## Patentansprüche

1. Vibrationslinearförderer umfassend eine Nutzmasse (4) und eine Gegenmasse (3), die über eine Antriebseinheit (8, 19, 24) in entgegengesetzte Richtungen schwingend bewegbar sind, wobei sowohl die Nutzmasse als auch die Gegenmasse über Federelemente (5, 6) unmittelbar mit einer Bodenplatte (2) verbunden sind, und wobei die Nutzmasse (4) und die Gegenmasse (3) über eine nicht-starre Verbindung (12; 32; 42), die ein direkt zwischen Nutz- und Gegenmasse (4, 3) verbundenes Schwingungsverstärkungsmittel für die von der Antriebseinheit (8, 19, 24) erzeugte Schwingung darstellt oder umfasst, miteinander verbunden sind.

2. Vibrationslinearförderer nach Anspruch 1, **dadurch gekennzeichnet, dass** das Schwingungsverstärkungsmittel ein mechanisches Verstärkungsmittel oder ein hydraulisches oder pneumatisches Verstärkungsmittel ist.

3. Vibrationslinearförderer nach Anspruch 2, **dadurch gekennzeichnet, dass** ein mechanisches Schwingungsverstärkungsmittel in Form wenigstens eines die Nutz- und die Gegenmasse verbindenden Federelements (12) realisiert ist.

4. Vibrationslinearförderer nach Anspruch 3, **dadurch gekennzeichnet, dass** die Antriebseinheit (8, 19, 24) direkt gegen das Federelement (12) arbeitet.

5. Vibrationslinearförderer nach Anspruch 3 oder 4, **dadurch gekennzeichnet, dass** das Federelement (12) eine gebogene Blattfeder ist.

6. Vibrationslinearförderer nach Anspruch 5, **dadurch gekennzeichnet, dass** die Blattfeder (12) eine U-Form aufweist.

7. Vibrationslinearförderer nach einem der Ansprüche 3 bis 6, **dadurch gekennzeichnet, dass** die Steifigkeit des Federelements (12), insbesondere der Blattfeder über ihre Länge variiert.

8. Vibrationslinearförderer nach Anspruch 7, **dadurch gekennzeichnet, dass** die gebogene Blattfeder (12) im Bereich des der Antriebseinheit (8, 19, 24) abgewandten Federschenkels schmäler ist.

9. Vibrationslinearförderer nach Anspruch 7, **dadurch gekennzeichnet, dass** der der Antriebseinheit (8, 19, 24) abgewandte Federschenkel (14) zweiteilig ist und aus einem ersten Schenkelabschnitt (15) und einem mit diesem verbundenen zweiten Schenkelabschnitt (17) geringerer Dicke besteht.

10. Vibrationslinearförderer nach Anspruch 2, **dadurch gekennzeichnet, dass** das mechanische Schwingungsverstärkungsmittel in Form eines Scharniers (42) realisiert ist, dessen einer Schenkel mit der Nutzmasse und dessen anderer Schenkel mit der Gegenmasse schwenkbar verbunden ist.

11. Vibrationslinearförderer nach Anspruch 10, **dadurch gekennzeichnet, dass** die Antriebseinheit direkt gegen den mit der Nutz- oder der Gegenmasse verbundenen Schenkel des Scharniers arbeitet.

12. Vibrationslinearförderer nach Anspruch 2, **dadurch gekennzeichnet, dass** das hydraulische oder pneumatische Schwingungsverstärkungsmittel in
Form zweier hintereinander geschalteter Kolben (33, 34) realisiert ist, wobei der Durchmesser des mit der Nutzmasse gekoppelten Kolbens kleiner als der des mit der Gegenmasse gekoppelten Kolbens ist, oder andersherum.

13. Vibrationslinearförderer nach Anspruch 12, **dadurch gekennzeichnet, dass**
der größere Kolben mittels einer ein Flüssigkeitsreservoir begrenzenden Membran (37), die über die Antriebseinheit bewegbar ist, realisiert ist.

14. Vibrationslinearförderer nach Anspruch 12 oder 13, **dadurch gekennzeichnet, dass** die Antriebseinheit direkt gegen den mit der Nutz- oder Gegenmasse gekoppelten Kolben arbeitet.

15. Vibrationslinearförderer nach einem der vorangehenden Ansprüche, **dadurch gekennzeichnet, dass** die Antriebseinheit (8) ein piezoelektrischer Antrieb (9) ist.

16. Vibrationslinearförderer nach einem der Ansprüche 1 bis 14, **dadurch gekennzeichnet, dass** die Antriebseinheit (24) ein pneumatisch oder hydraulisch reversibel aufweitbare Balg (25) ist.

17. Vibrationslinearförderer nach einem der Ansprüche 1 bis 14, **dadurch gekennzeichnet, dass** die Antriebseinheit ein elektrischer Antriebsmotor (19) mit Exzentertrieb ist.

## Claims

1. A linear vibrating feeder comprising an effective load (4) and a counter load (3) which are displaceable in a vibrating manner in opposite directions via a drive unit (8, 19, 24),
wherein both the effective load and also the counter load are connected directly to the base plate (2) via spring elements (5, 6) and
wherein the effective load (4) and the counter load (3) are connected to one another via a non-rigid connection (12, 32; 42) which represents or comprises a vibration amplifying means connected directly between the effective load and counter load (4, 3) for the vibration generated by the drive unit (8, 19, 24).

2. The linear vibrating feeder according to claim 1, **characterised in that**
the vibration amplifying means is a mechanical amplifying means or a hydraulic or pneumatic amplifying means.

3. The linear vibrating feeder according to claim 2, **characterised in that**
a mechanical vibration amplifying means is realised in the form of at least one spring element (12) connecting the effective load and the counter load.

4. The linear vibrating feeder according to claim 3, **characterised in that**
the drive unit (8, 19, 24) operates directly against the spring element (12).

5. The linear vibrating feeder according to claim 3 or 4, **characterised in that**
the spring element (12) is a curved plate spring.

6. The linear vibrating feeder according to claim 5, **characterised in that**
the plate spring (12) provides a U-shape.

7. The linear vibrating feeder according to any one of claims 3 to 6,
**characterised in that**
the rigidity of the spring element (12), especially of the plate spring, varies over its length.

8. The linear vibrating feeder according to claim 7, **characterised in that**
the curved plate spring (12) is narrower in the region of the spring arm facing away from the drive unit (8, 19, 24).

9. The linear vibrating feeder according to claim 7, **characterised in that**
the spring arm (14) facing away from the drive unit (8, 19, 24) provides two parts and comprises a first arm portion (15) and a second arm portion (17) of reduced thickness connected to the former.

10. The linear vibrating feeder according to claim 2, **characterised in that**
the mechanical vibration amplifying means is realised in the form of a hinge (42), of which one arm is connected to the effective load and of which the other arm is connected in a pivoting manner to the counter load.

11. The linear vibrating feeder according to claim 10, **characterised in that**
the drive unit operates directly against the arm of the hinge connected to the effective load or the counter load.

12. The linear vibrating feeder according to claim 2, **characterised in that**
the hydraulic or pneumatic vibration amplifying means is realised in the form of two pistons (33, 34) connected one behind the other,
wherein the diameter of the piston coupled to the effective load is smaller than that of the piston coupled to the counter load, or vice versa.

13. The linear vibrating feeder according to claim 12, **characterised in that**
the larger piston is realised by means of a membrane (37) limiting a fluid reservoir, which is displaceable via the drive unit.

14. The linear vibrating feeder according to claim 12 or 13, **characterised in that**
the drive unit operates directly against the piston coupled to the effective load or the counter load.

15. The linear vibrating feeder according to any one of the preceding claims,
**characterised in that**
the drive unit (8) is a piezoelectric drive (9).

16. The linear vibrating feeder according to any one of claims 1 to 14,
**characterised in that**
the drive unit (24) is a bellows (25) capable of reversible pneumatic or hydraulic expansion.

17. The linear vibrating feeder according to any one of claims 1 to 14,
**characterised in that**
the drive unit is an electric drive motor (19) with a cam drive.

## Revendications

1. Convoyeur linéaire à vibrations, comportant une masse utile (4) et une masse conjuguée (3), qui peuvent effectuer un mouvement oscillatoire dans des directions opposées au moyen d'une unité d'entraînement (8, 19, 24), dans lequel tant la masse utile que la masse conjuguée sont assemblées directement à une plaque de fond (2) par l'intermédiaire d'éléments à ressort (5, 6), et dans lequel la masse utile (4) et la masse conjuguée (3) sont reliées l'une à l'autre par l'intermédiaire d'un assemblage (12, 32 ; 42) non rigide qui, pour l'oscillation générée par l'unité d'entraînement (8, 19, 24), représente ou comporte un moyen amplificateur d'oscillation qui est assemblé directement entre la masse utile (4) et la masse conjuguée (3).

2. Convoyeur linéaire à vibrations selon la revendication 1, **caractérisé en ce que** le moyen amplificateur d'oscillation est un moyen amplificateur mécanique ou un moyen amplificateur hydraulique ou pneumatique.

3. Convoyeur linéaire à vibrations selon la revendication 2, **caractérisé en ce qu'**un moyen mécanique amplificateur d'oscillation est réalisé sous la forme d'au moins un élément à ressort (12) reliant la masse utile et la masse conjuguée.

4. Convoyeur linéaire à vibrations selon la revendication 3, **caractérisé en ce que** l'unité d'entraînement (8, 19, 24) travaille directement contre l'élément à ressort (12).

5. Convoyeur linéaire à vibrations selon la revendication 3 ou 4, **caractérisé en ce que** l'élément à ressort (12) est un ressort à lames courbé.

6. Convoyeur linéaire à vibrations selon la revendication 5, **caractérisé en ce que** le ressort à lames (12) présente une forme en U.

7. Convoyeur linéaire à vibrations selon l'une quelconque des revendications 3 à 6, **caractérisé en ce que** la rigidité de l'élément à ressort (12), en particulier du ressort à lames, varie sur la longueur de celui-ci.

8. Convoyeur linéaire à vibrations selon la revendication 7, **caractérisé en ce que** le ressort à lames (12) courbé est plus étroit dans la zone de la branche détournée de l'unité d'entraînement (8, 19, 24).

9. Convoyeur linéaire à vibrations selon la revendication 7, **caractérisé en ce que** la branche (14) du ressort, détournée de l'unité d'entraînement (8, 19, 24), est en deux parties et est constituée d'une première partie de branche (15) et d'une deuxième partie de branche (17) reliée à cette dernière et ayant une plus faible épaisseur.

10. Convoyeur linéaire à vibrations selon la revendication 2, **caractérisé en ce que** le moyen mécanique amplificateur d'oscillation est réalisé sous la forme d'une charnière (42), dont une branche est reliée de manière oscillante à la masse utile et dont l'autre branche est reliée de manière oscillante à la masse conjuguée.

11. Convoyeur linéaire à vibrations selon la revendication 10, **caractérisé en ce que** l'unité d'entraînement travaille directement contre la branche de la charnière, qui est reliée à la masse utile ou à la masse conjuguée.

12. Convoyeur linéaire à vibrations selon la revendication 2, **caractérisé en ce que** le moyen hydraulique ou pneumatique amplificateur d'oscillation est réalisé sous la forme de deux pistons (33, 34) montés l'un derrière l'autre, le diamètre du piston couplé à la masse utile étant inférieur au diamètre du piston couplé à la masse conjuguée, ou inversement.

13. Convoyeur linéaire à vibrations selon la revendication 12, **caractérisé en ce que** le plus grand piston est réalisé au moyen d'une membrane (37), qui délimite un réservoir de liquide et qui peut être déplacée au moyen de l'unité d'entraînement.

14. Convoyeur linéaire à vibrations selon la revendication 12 ou 13, **caractérisé en ce que** l'unité d'entraînement travaille directement contre le piston couplé à la masse utile ou à la masse conjuguée.

15. Convoyeur linéaire à vibrations selon l'une quelconque des revendications précédentes, **caractérisé en ce que** l'unité d'entraînement (8) est un entraînement (9) piézoélectrique.

16. Convoyeur linéaire à vibrations selon l'une quelconque des revendications 1 à 14, **caractérisé en ce que** l'unité d'entraînement (24) est un soufflet (25) pouvant être déployé de manière réversible par voie pneumatique ou hydraulique.

17. Convoyeur linéaire à vibrations selon l'une quelconque des revendications 1 à 14, **caractérisé en ce que** l'unité d'entraînement est un moteur d'entraînement (19) électrique avec un entraînement excentré.
